# EUROPEAN PATENT APPLICATION

(11) **EP 1 879 359 A2**
(43) Date of publication of application: **16.01.2008**
(21) Application number: 07112107.3
(22) Date of filing: 09.07.2007
(51) Int. Cl.: H04L 29/08, H04L 29/06

(54) **Intelligent redialling with presence information**

(30) Priority: 10.07.2006 CA 2551692
(71) Applicant: Ascalade Communications Inc., Richmond, BC V6W 1K7 (CA)
(72) Inventor: Bernard, Bruce Vincent Ward, North Vancouver British Columbia V7G 1Z5 (CA); Ho, Eric Sze Shun, Richmond British Columbia V7A 2C3 (CA); Ho, Brian Sze King, Richmond British Columbia V6Y 1C4 (CA)
(74) Representative: Wallis, Helen Frances Mary

(57) **Abstract**

Discloses a system and method for producing a status alert indicating a user contact is now online on a communications device operable with a soft phone application running on an internet interface device in communication with at least one messaging service provider. The communications device has a telephone style handset with alert means to produce a visual and/or audio user perceptible alert. The communications device includes a keypad and display for displaying a user contact list of the soft-phone service application. The list of user contacts for each messaging service provider is monitored to find specified user contacts that have come online. A visible and/or audible alert is produced for each newly online contact the user has specified an alert for. The user can specify the parameters of the alert to obtain a unique alert for each selected contact.

## Description

### FIELD OF THE INVENTION

The present invention relates generally to voice over internet protocol (VolP) telephony operation and functionality. More particularly, the present invention relates to operation of a VolP software client interacting with a VolP service provider on a telephone handset Internet interface device or a soft phone application on a personal computer.

### BACKGROUND OF THE INVENTION

Voice over Internet Protocol (VolP) telephony is a rapidly expanding market in which a number of VoIP service provider companies provide users with an ever increasing set of communications services, features and capabilities, including the capability to effect audio voice communication over the Internet computer network. Generally, the VolP service providers allow their respective users to communicate with each other. For example a user of a VolP service provider generally has the capability to place phone calls to other members of the VolP service and may also have the capability to place calls to subscribers of the standard public switched telephony network, or PSTN subscriber.

Some VolP service providers supply VolP phones that resemble standard telephone sets but contain networking hardware and connect to wired or wireless Ethernet networks that are interconnected with the Internet. These hardware solutions provide an interface that most users are familiar with and mimic conventional PSTN telephone handsets by allowing simple dialing by number and incorporation of other PSTN features such as call forwarding, caller-ID to name a few examples. However, using these hardware solutions to place a call to a PSTN subscriber requires use of particular hardware and protocol services to support an interconnection with the PSTN. PSTN interconnection raises a wide range of issues, including interoperation behaviour, regulatory hurdles, not to mention additional fees and charges to support the interconnection capabilities.

Another VolP implementation uses a soft-phone client application running on a user's personal computer that allow users to communicate in various manners with other users, including the capability to place phone calls to one another. These soft-phone client applications are sometimes simply referred to as soft-phones. The soft-phone applications are executed on the personal computer and receive local audio pickup from a microphone connected to the computer. The soft-phone application digitizes the received audio into a digital signalling representation of the local audio pickup which is then sent over the Internet network to the other party or parties in the call, typically using elements of the VolP protocol. Similarly a digital representation of far end audio is received by the soft-phone application which plays it over the computer audio out devices. These soft-phone applications are sometimes used with headsets that acoustically isolate the microphone and speakers from each other to prevent feedback. Also, there are wired or wireless telephone handset type devices which are adapted to interoperate with the soft-phone application, as for example, the graphic display cordless telephone device disclosed in US patent application serial number 11/352,333 of Alex Cheng, Christina Yeung and Eric Ho and assigned to the assignee of the present application.

Soft-phone applications often include contact list maintenance and management functionality (commonly referred to as buddy lists), to allow the user of the soft-phone application to initiate a call simply by picking a contact on the buddy list. Also applications may integrate with instant messenger (IM) applications, such as Microsoft Instant Messenger (trademark) or America Online Instant Messenger (AIM) (trademark) to name a few such chat or instant message applications. The online status of a contact in the contact list for a particular VolP service or instant message service is shown, including for example, such status indications as, online, offline, busy, away. As a result, a user can review the contacts in his or her contact list and determine which contacts are presently online, and able to receive a VoIP call or instant message. If the contact information includes alternate calling numbers for a contact, a call can be initiated using the alternate calling numbers. For example, a call can be placed to an offline contact by placing the call through the public switched telephone network (PSTN) to complete the call.

Soft-phone applications are in common use to access VoIP calling services as they provide a low cost, easily distributed mechanism for VolP or instant messaging user membership and calling implementation. However, soft-phone applications for use on personal computer hardware typically require the user to be physically near the computer running the softphone application. In addition, there are other VolP network access implementations that include an Internet interface appliance in place of a personal computer that interoperate with wireless or cordless handsets having a graphical user interface display.

More and more cordless telephone handsets are equipped with a graphical display which supports the ability to display a user configurable contact list detailing contact arrangements for a contact over the PSTN, VoIP services or instant messaging services or even email. However, the handset display is necessarily of limited size and, as a result, a user intending to make a call to a particular contact using a desired VoIP or instant messaging service would need to manipulate the handset to scroll through the contact list in order to reach the specific contact to determine that contact's online status information. Furthermore, the contact list is often not constantly displayed on the phone handset and user needs to press a button to launch the contact list, at which time the phone polls the phone book application to load the contact list onto the handset. Then, when trying to call a particular contact, the contact may be offline, busy or away and consequently not even available to receive a call. As a result, a user would have to check back on the handset constantly to determine if the particular contact has come online or not.

With the above limitations described, it is not convenient to check the handset contact list constantly for the status of a particular contact. Also, users who constantly receive a lot of missed calls need to scroll through the missed calls list and try to make call backs to each contact one by one. Often the contact is not home or unavailable to answer the call, resulting in another missed call and time being wasted in trying to make the call back available to take the return call.

### SUMMARY OF THE INVENTION

It is an object of the present invention to obviate or mitigate at least one of the foregoing disadvantages.

In a first aspect, the present invention provides an interface for soft phone applications as described below.

This invention relates to a telephone handset with a graphical display that is connected to the internet using an internet interface appliance such as a computer, a base station device interoperating with a computer, or a base station device itself, any of which are connectable to the Internet directly, that is with a public IP address, or indirectly via a router, that is a device that manages Internet bound traffic on a private network behind a single Internet public IP address. The internet interface appliance may also be connectable to a PSTN line. The preferred telephone handset is a wireless telephone styled handset with a graphical display that interoperates with the internet interface appliance or a computer to interface with soft-phone applications. By using standard telephone wireless communications bands, such as in the 900 MHz, 2.4GHz or 5.8GHz bands using conventional protocol standards, for example the Worldwide Digital Cordless Telecommunications (WDCT) or Digital Enhanced Cordless Telephone (DECT) standards, a cordless telephone handset device interface can be provided to the user.

The wireless telephone handset communicates with an Internet interface device, such as a base station running an VoIP client, generally referred to as a soft-phone application, or a base station coupled to a personal computer (PC) running the soft-phone application or VoIP client. The internet interface device provides a platform to run a software interface, as for example, a plug-in or a device driver that facilitates interaction of the handset and base station with the PC soft-phone application. In one embodiment, the base station connection to the personal computer uses a standard interface such as a universal serial bus (USB) connection, or a IEEE1394 connection commonly referred to as a Firewire (trade-mark) connection thus providing communication hardware enabling the handset to interact and interoperate with the softphone application. One skilled in the art will appreciate that other standard and proprietary connections between the computer and base station as for example a wireless connection such as Bluetooth (trade-mark) can be used without departing from the scope of the present invention. In another embodiment, the base station itself provides a platform to run the softphone application and interconnect with the Internet as well as the communication hardware to enable the handset to interact and interoperate with the softphone application

The handset is used for the audio input and output to place or receive a call using the soft-phone application. This allows mobility of the user, allowing the user to move in proximity to the internet interface appliance or computer during the telephone call or to place or receive a call via the soft-phone application from any location while the handset is within range of the base station. It also addresses the interface issues that are common with soft-phone applications by providing users with an interface that is common and comfortable for many users. The base station need not be the full sized base station common for cordless telephones, and instead can be a small "dongle" device connected to a personal computer. In embodiments with small dongle devices as base stations, the handset component can be powered either with disposable batteries or can be powered by a rechargeable battery that is recharged using an external power supply. In embodiments with a fuller sized base station having all necessary software and hardware components to function as an internet interface device. The handset can be powered using either an external power supply or with power drawn from the computer connection over an interface such as a USB connection.

The handset incorporates a display that interacts with the soft-phone application to allow the user's contact list to be updated to maintain a current status and shown on the display. By using either alphabetic jumping, or simple directional inputs, the user can select a contact from the contact list, and initiate a call from the handset. Additionally, a call-display-like feature shows the user information about someone who is placing an inbound call. The handset is equipped to answer or decline in-bound calls. By allowing the handset to interact with the soft-phone application to show the active contact list, to place calls to other users on the active contact list and to accept calls, the user is able to freely roam within the range of the serving area of the cordless phone while maintaining a connection to the VoIP network. As a result, the user can make use of VolP without many of the drawbacks of soft-phone applications.

The telephone handset works with a VolP or instant messaging client software which the user can interact with by using either a connected computer or the telephone handset itself. If the user wants to call a contact that is currently offline, the user can select the specific contact from the client contact list using the telephone handset, and through an options menu, request an online notification for that contact, which can be referred to as clamping a call to that contact. The moment the contact comes online, the handset will emit a ring melody specific to this feature to alert the user of the ability to initiate a call to that contact. The user places a call by depressing an acceptance key resulting in a call being placed to the specified contact. The invention eliminates the need to check the desired contact's online status, for example by repetitively examining his or her contact list to see if a specific user has come online or not. With the call clamping set to the specific contact, the user can do other tasks and yet have the peace of mind as they will be alerted accordingly when the contact is available for a call.

In one of its aspects the invention provides an alert mechanism allowing the phone to alert the user when the desired contact has come online. The alert given to the user is configurable to include an ability to attract the attention of the user easily.

A user configurable recall mechanism allows the phone to initiate a call automatically or in response to a user input following an online alert such that the user does not have to re-input calling particulars to place the call back.

In another of its aspects, the invention supplies a mechanism to allow the user to view his or her redial list, call list including inbound and outbound calls and phonebook entries where each includes an easily recognizable and understood indication by graphics, color or text as to whether the contact is online or not. Thus for the calling back or return call problem, the user is able to identify easily which contacts are currently on line and therefore available to take the return call.

Also provided are a redial list and the phonebook list that are configured to show the presence indication of the various contacts. When a user returns home and checks the calls log for calls that have been missed, the current presence status of the contact will be shown accordingly beside each missed calls log record. The user can then easily identify which contacts are currently online and select to call back those specific contacts first.

The call clamping onto a user selected contact enables the user to be able to simply put down the phone and not need to check the phone periodically. When the contact comes online, the phone will ring with a melody specific to this feature to alert the user. In one configuration, the ring will be emitted in the same way as a normal incoming call; thus, it should be easily noticeable and understandable by the user. To respond to the alert and initiate a call to that contact, the user presses a handset key and the phone will then place a call which eliminates the need to have the user re-initiate the call manually by going through the contact list all over again. The integration of the presence information into the redial list, calls log or phone directory allows the user to identify directly whether the contact is currently online or not. If online, the user could just make the call back from the calls log as normal.

In another aspect, the present invention incorporates a contact status alert indicator to allow the user to configure alerts for individuals in the user's contact list or buddy list. The status alert indicator is configurable for user selected contacts from the contact list or buddy list, to provide a user perceptible alert. The user perceptible alert is a visible and/or audible indication that a contact has come online and thus is available to talk to. Where the user participates in several instant messaging services, for example, MSN Messenger (trademark), Skype (trademark), Yahoo! Messenger (trademark), the appearance of any selected contact or buddy on any of the instant messaging services will trigger the contact status alert indicator to produce a perceptible alert for that contact. User participation in only a single instant messaging service will trigger a perceptible alert when any selected buddy or contact appears or comes on-line on the instant messaging service. The perceptible alert includes a visually perceptible alert and/or an audibly perceptible alert. A visually perceptible alert is provided by an alert indicator light source on the handset. Variations in light colour and activation methodology, e.g. solid coloured light, variations in light colour such as repetitive sequences of variations in light colour and variations in light intensity such as blinking, flashing, fading in and out at a fade in rate and a fade out rate, where the fade rates are identical or independent and a flash or repetition rate etc., each or any of which can be user specified to enable a specific unique visual alert to be used to indicate a particular contact or a particular contact on a particular instant messaging service.

The perceptible alert also includes an audibly perceptible alert produced by a sound source. The audibly perceptible alert includes a tone, a ring tone, a recording or the like emitted from a sound source, such as at the base or the handset. Variations in sounds are specified to enable a specific audible alert to be used to indicate a particular contact or a particular contact on a particular instant messaging service coming on line. The user perceptible alert also includes a tactile alert such as by handset vibration.

One skilled in the art will appreciate that the handset and base station communicate with the soft-phone application on the PC via a USB (or other) connection. The handset and base station are able to poll a soft-phone for both user status (online, busy, etc.) and contact lists. Both the status and the contact lists are displayed on the handset. The handset has the ability for a user to log out of the soft-phone application, and then log in as a separate user. For soft-phone applications that can be run as multiple instances on a single system, the handset can display the contacts of all the active users and provide distinguishing marks to identify the different lists. In another embodiment, the different lists can be accessed separately. In a presently preferred embodiment, the telephone's graphic display is able to duplicate in whole or in part, the soft-phone interface on the PC. The handset is preferably able to extract only the audio data from the soft-phone and filter out other OS sounds or other application sounds.

The handset can be modeled to an operating system as an HID (Human Interface Device) between the user and a soft-phone. A quick key on the computer keyboard can be used to toggle the audio output/input between handset and PC to provide the user with greater control of the soft-phone application. If the handset includes the ability to store a phone directory or phone book, it can be synchronized with the soft-phone or other applications on the computer to maintain a consistent calling experience for the user, and incoming caller information can be stored on the phone, as it can be with other standard telephones. One skilled in the art will appreciate that dial tones and busy signals can be simulated for use of the VolP network, to provide users with a seamless experience.

In one presently preferred embodiment, the product includes a cordless handset with screen (preferably a color screen), a base with a connection (such as a USB connection), and optionally a telephone line interface. The handset and base interact with software running on a PC such as a soft-phone application or a soft-phone application plug-in. Examples of such soft-phone applications include Microsoft Messenger (trade-mark), Yahoo! Messenger (trade-mark) and Skype (trade-mark). Audio signals, "buddy list" updates, status and control signals are sent between the PC and the base station/dongle over the USB connection. The base station/dongle formats the appropriate information and sends it wirelessly to the handset for processing and display. Thus, the user is able to roam within the wireless range of the handset while maintaining the connection to the soft-phone application.

In one of its aspects, the invention provides an online status contact calling system having a communications device interoperable with a soft phone application running on an internet interface device with a telephone style handset including a keypad and display. A contact list data storage contains information identifying a contact and configuration information defining at least one communications address for the contact. Each communications address includes an online status indicator corresponding to the online presence of said contact at said communications address and a call request indicator having either an active or inactive status. A user input means is provided to display, update and maintain said contact list data storage and a contact presence agents updates the online status indicator to indicate the contact is online or other status indication. And the system has a call means that is responsive to an active status call request indicator to activate the soft phone application to place a call to the contact when said online status indicator indicates the contact is online.

In a variation, the call means further includes alert means to produce a user perceptible alert in response to a change in status to an online status of a contact having an active status call request indicator and user input means to control said call means to place a call to said contact responsive to said alert means. Optionally the system further includes an inbound call agent responsive to incoming calls to the softphone application to produce an inbound call entry in a call list, each such entry including caller communications address information and available caller identification information and a display agent to produce a display of at least a portion of said call list. In another option, the system further includes an outbound call agent responsive to calls placed by said softphone application to produce an outbound call entry in a call list, each such entry including called communications address information and a display agent to produce a display of at least a portion of said call list.

In another of its aspects, the invention provides a status monitoring system operable with a soft phone application communicable with a voice service provider that includes user input means to maintain a contact list including configuration information identifying a contact, a communications address for that contact, an online status indicator and a contact call request indicator updatable between an active call request status or an inactive call request status. A contact presence agent is communicable with at least one voice service provider to update the contact online status indicator to indicate the contact is online or has some other status indication. A display is provided to produce an output showing configuration information for at least one contact including an online status indication of that contact and an alert monitor is used to produce a user perceptible output in response to an online change in status of a contact in said contact list having an active call request status.

In a further variation, the system further includes an inbound call agent responsive to incoming calls to said softphone application to produce an inbound call entry in a call list, each such entry includes caller communications address information and available caller identification information. A display agent produces a display of at least a portion of said call list, where each entry in the call list further includes an online status indication of the online or other status at the caller communications address. Optionally included is an outbound call agent that responds to calls placed by the softphone application by producing an outbound call entry in a call list, each such entry including called communications address information and an online status indicator to indicate the online or other status of the called communications address.

And in yet another of its aspects, the invention provides a method of operating a communications device interoperable with a soft phone application running on an internet interface device, where the communications device has a telephone style handset including a keypad and display that includes the steps of providing a contact list data storage to contain at least one entry, each such entry containing information identifying a contact, and configuration information defining at least one communications address for the contact. A contact presence agent operates to determine an online or other status of the communications address and the communications device is capable of receiving a call request; and activating the soft phone application to place a call to a communications address having an online status.

In a variation of the method, the device display provides an output of at least a portion of the entries of the contact list including the online or other status of each displayed communications address. On receiving a call request, the device operates to produce a user perceptible alert in response to a change in status to an online status of a contact having an active status call request indicator and places a call to the contact in response to user input.

Other aspects and features of the present invention will become apparent to those ordinarily skilled in the art upon review of the following description of specific embodiments of the invention in conjunction with the accompanying figures.

Embodiments of the present invention will now be described, by way of example only, with reference to the attached Figures, wherein:

### BRIEF DESCRIPTION OF THE DRAWINGS

Figure 1 is an illustration of an embodiment of a handset and base station of the present invention;
Figure 2 is a functional block diagram of components in a preferred embodiment of an internet interface device of the present invention;
Figure 3 is a functional block diagram illustration components in a USB base station of the present invention;
Figure 4 is a functional block diagram illustrating the architecture of a handset of the present invention;
Figure 5 is a plan view of a preferred embodiment of a USB base station of the present invention;
Figure 6 is an elevation view of a preferred embodiment of a handset of the present invention;
Figure 7 is a schematic for components in a preferred embodiment of a USB base station of the present invention; and
Figure 8 is a schematic for components in a preferred embodiment of a handset constructed in accordance with the present invention.
Figure 9 is flow chart of an exemplary algorithm for producing an online contact status alert.
Figure 10 is a flow chart of an exemplary algorithm for performing an online contact call back based on presence information.
Figure 11 shows a table based implementation of a buddy list/telephone directory user interface display screen.
Figure 12 shows an embodiment of a contact entry and update user interface screen.
Figure 13 shows an implementation of a user interface for a call contact log display.
Figure 14 shows an exemplary user interface for an action selection screen that is produced to overlay a particular contact selected from the call log list of Figure 13.

### DETAILED DESCRIPTION

In the following description, for purposes of explanation, numerous details are set forth in order to provide a thorough understanding of the present invention. However, it will be apparent to one skilled in the art that these specific details are not required in order to practice the present invention. In other instances, well-known electrical structures and circuits are shown in block diagram form in order not to obscure the present invention. For example, specific details are not provided as to whether the embodiments of the invention described herein are implemented as a software routine, hardware circuit, firmware, or a combination thereof.

Embodiments of the invention may be represented as a software product stored on a machine-readable medium (also referred to as a computer-readable medium, a processor-readable medium, or a computer usable medium having a computer readable program code embodied therein). The machine-readable medium may be any type of magnetic, optical, or electrical storage medium including a diskette, compact disk read only memory (CD-ROM), memory device (volatile or non-volatile), or similar storage mechanism. The machine-readable medium may contain various sets of instructions, code sequences, configuration information, or other data, which, when executed, cause a processor to perform steps in a method according to an embodiment of the invention. Those of ordinary skill in the art will appreciate that other instructions and operations necessary to implement the described invention may also be stored on the machine-readable medium. Software running from the machine readable medium may interface with circuitry to perform the described tasks.

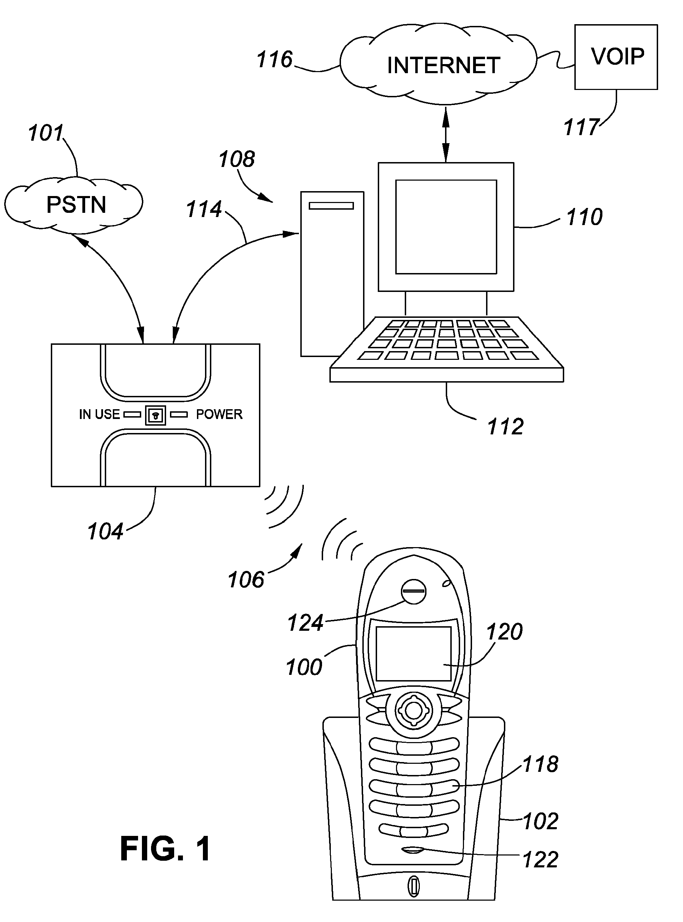

The preferred embodiments of the invention will now be described with reference to the attached drawings. Figure 1 shows a functional block diagram of elements of the invention including a wireless handset 100 cradled in a recharge station 102 where the wireless handset can be placed when not in use to recharge the batteries of the wireless handset. The wireless handset communicates with base station 104 over a wireless communications channel 106 using standard wireless connections in the 900 MHz, 2.4 or 5.8 Ghz bands using a suitable digital encoding protocol, for example, the Worldwide Digital Cordless Telecommunications (WDCT) or Digital Enhanced Cordless Telephone (DECT) standards for wireless telephone handset communications. The communications between the handset and base station over the wireless channel is bidirectional and includes both audio signaling as well as control and supervisory signaling to facilitate exchange of call control information and supervisory signalling between the handset and base station as well as audio communications delivered to and received from the user of the wireless handset 100. The base station 104 is coupled to an internet interface device 108 which is shown in the preferred embodiment as a separate personal computer (PC) computer having an output display 110, for example, a monitor and input devices 112 such as a keyboard. Communication between the base station 104 and the internet interface device 108 is effected by a wireline coupling 114 which is preferably over a standard interface such as a universal serial bus (USB) connection or an IEEE1394 connection which facilitates exchange of call control and supervision signaling between the handset and the base station and the internet interface device 108. In a preferred embodiment, the wireline coupling provides power to the base station 104 so a separate power supply or battery for the base station is not required. The internet interface device 108 provides a computing platform to operate a VoIP client to facilitate and effect VolP communication over the internet 116. The internet interface device VolP client can take one of several forms depending on the nature of the VolP service provider 117 providing the VoIP service to the user of handset 100. Common VolP services that are available which provide client software to operate on personal computers include Skype (trade-mark), MSN Messenger (trade-mark) and numerous others.

Wireless handset 100 provides a keypad 118 which includes a supervisory function keys as for example power on and off buttons, menu and select buttons as well as the dial number input buttons 0 through 9, octothorp and asterisk common to dual tone multifrequency (DTMF) touch tone telephones. In this manner a conventional handset is presented to a user to initiate and receive VolP calls over the internet. The wireless handset also includes a graphical display 120 which provides the user with an output that can be configured and changed over time by the applications running on the wireless handset 100 under software control. For example, the display 120 may display a buddy list of Skype (trademark) users and their current status using a graphical display that corresponds to the buddy list that conventionally appears on the output display 110 of the personal computer when a user is operating a Skype (trademark) softphone client on the PC. An alert indicator 121 is preferably provided on the handset to provide visually perceptible alerts to a user. In a preferred embodiment, the alert indicator 121 is a light emitting diode (LED), and more preferably a multi-colored LED assembly capable of emitting a light of varying colours, such as blue, green, red, and the like. The alert indicator light source provides user alerts for such items as system power up, recharging, recharged, incoming call, handset ringing, message waiting and buddy list status change notifications, for example, that a contact on a buddy list has come online and is available to contact.

The handset also includes a microphone 122 and earpiece 124 to allow the user to use the wireless handset in a conventional manner familiar to a telephone user.

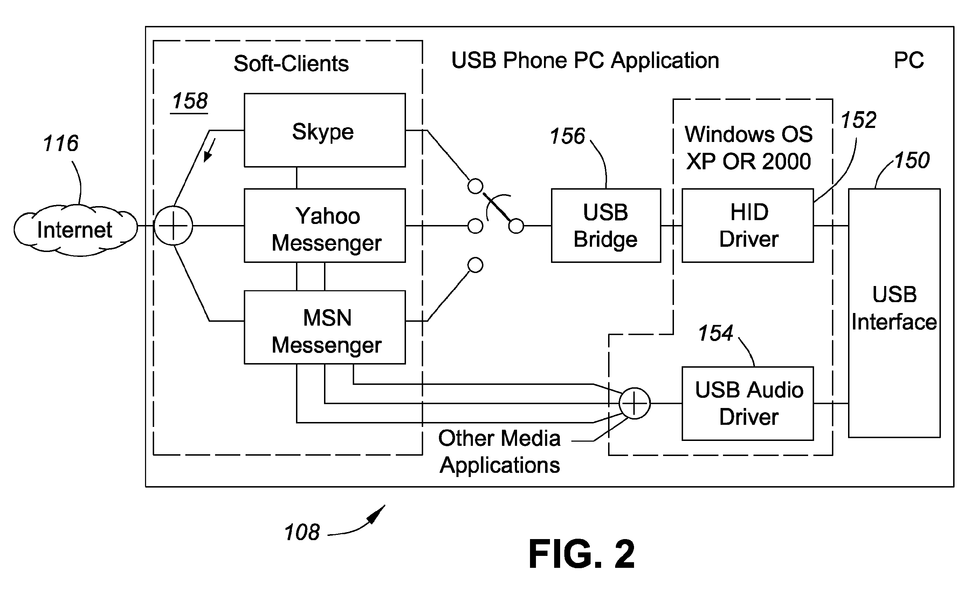

Figure 2 shows a functional block diagram of components of a preferred embodiment of a software application running on the internet interface device 108, which is embodied as a personal computer (PC). The PC includes a USB interface 150 which is used to supply power to and communicate over USB wireline coupling 114 of Figure 1. The PC runs an operation system program, such as a version of the Windows (trade-mark) operating system provided by Microsoft (trademark), for example, Windows 2000 (trademark) or Windows XP (trademark). The operating system provides a framework to establish and operate software providing driver functionality to interact with the USB interface 150 including a human interface device driver (HID)152 as well as bidirectional USB audio driver 154. A USB bridge application 156 controls the USB interface 150 interaction with one or more VolP soft clients 158 where Skype (trademark), Yahoo Messenger (trademark) and MS Messenger (trademark) are shown by way of example in the figure. The softphone clients 158 control and facilitate communication over the internet 116 with a VoIP service provider 117 to initiate and receive messages or calls to and from other users of the VoIP service corresponding to the selected softphone client operating on the PC internet interface device.

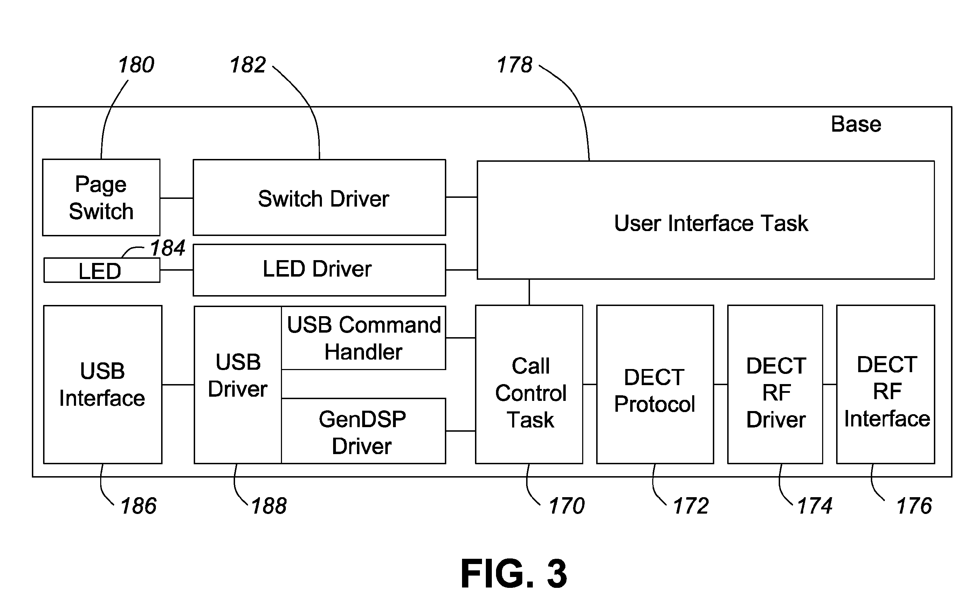

Figure 3 shows a functional block diagram of components of a software application operable on a computer processor provided in base station 104 to control and support the functionality of the base station in effecting communications between the internet interface device 108 and the wireless handset 100. The base station runs a call control task 170 that controls and coordinates the operation of the base station elements. A series of radio frequency (RF) functions 172, 174 and 176 support the particular protocol driver mechanism and RF interface required by the selected wireless media that is the wireless channel 106, used for communications between the base and the handset. In the specific embodiment shown in Figure 3, the European DECT standard is shown as implemented by means of a DECT protocol software function or application 172, a DECT RF software function or driver 174 and a DECT RF interface device 176. Those skilled in the art will appreciate that other wireless protocols can be implemented by providing suitable functionality in a comparable application and interface device as, for example, a digital spread spectrum (DSS) application and interface operable on a 900 MHz or 2.4 or 5. 8 GHz communications channel media. A user interface task 178 communicates with the call control task to provide user functionality at the base 104. For example, the base preferably includes a page switch 180 which can be manipulated by user to cause the handset to emit an audible signal to allow the handset to be located. The page switch is monitored by a switch driver application 182 to relay the page switch position to the user interface task 178. Similarly, the base preferably includes an in-use indicator 184 in the form of a light emitting diode (LED) which the call control task 170 operates to indicate visually on the base whether the handset is in use or not. A wireline interface 186 is provided to connect to the wireline coupling 114 connecting the base to the internet interface device.

In the preferred embodiment, the wireline interface 186 is a universal serial bus (USB) interface as that permits the base to receive power from the internet interface device 108 as well as effect bidirectional communications between the internet interface device and the base of both the audio signaling that allows user communication using the VolP protocol over the internet as well as facilitate handling of call control signaling such as off hook, on hook and ring tone, dial tone functionality or exchange of buddy list updates with the soft phone client application running on the internet interface device. The wireline interface 186 is controlled by handler and driver applications 188 which are tailored to and written for the specific media of the wireline coupling which extends between the base and the internet interface device. In the specific embodiment shown in Figure 3, USB drivers and command handlers are provided to control the behavior of the USB type or wireline interface 186.

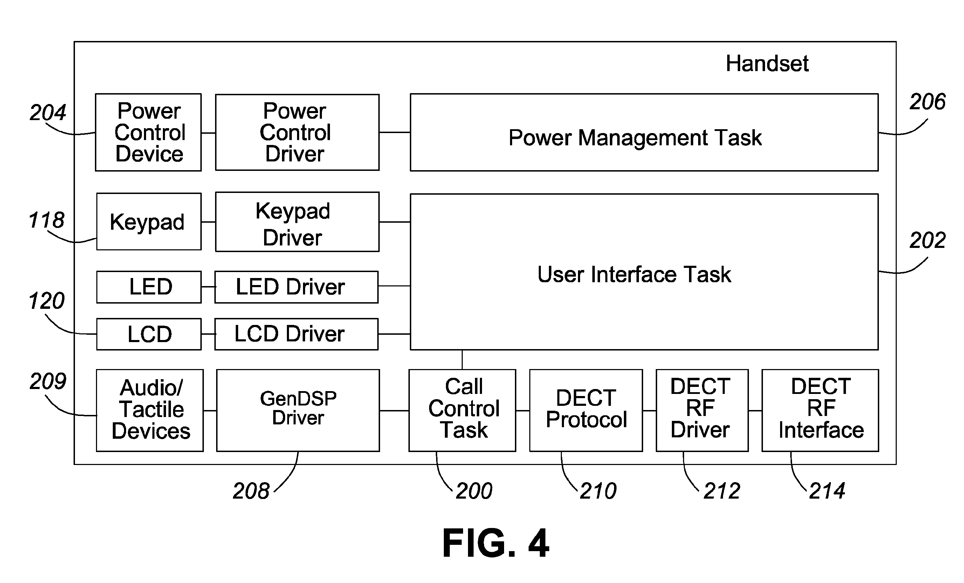

Figure 4 shows a functional block diagram illustrating the architecture of a handset of the present invention including function blocks for the applications running on a computer system of the wireless handset 100. The handset has a call control task 200 that coordinates the user manipulation of the handset as well as the communications between the base and handset over the wireless channel 106 as depicted in Figure 1. The handset includes a user interface task 202 that coordinates the information provided to the user on the handset graphical display 120 which is a liquid crystal display (LCD) by communication between the user interface task and the LCD driver. The handset further includes a light indicator 121 such as one or more light emitting diodes (LED) driven by a LED driver under control of the user interface task 202. User manipulation of the handset keypad 118 is communicated with user interface task 202 by means of associated keypad driver. In this manner user input to the handset and user output from the handset on the keypad and LCD is coordinated at the handset. The handset is powered by a battery in the preferred embodiment and a power control device 204 provides the necessary electrical coupling between the recharge station 102 and the batteries held within the handset itself. To control changing of the batteries and provide an indication of the charge level of the batteries to the user, a power management task 206 is preferably included as a software application on the handset. Audio communication to the microphone, earpiece of the handset as well as any optional tactile devices such as a vibrating unit, generally depicted by equipment block 209, is controlled by a general digital signal processing driver (GDSP) 208 which controls and supports the audio signaling over the handset. The RF signaling between the base and handset is supported by series of RF applications 210, 212 and 214. In the particular embodiments shown in Figure 4, the DECT protocol is implemented by means of a DECT protocol application 210 a DECT RF driver application 212 which controls signaling over the DECT RF interface 214.

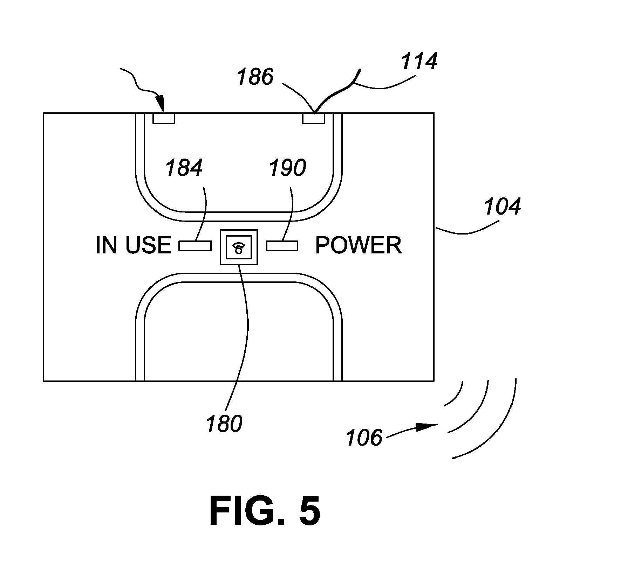

Figure 5 is a top plan view of an embodiment of the base 104. The base includes antenna equipment to support communications over the wireless channel 106 as well as a wireline connector 186 to interface with the wireline coupling 114. Indicator lights such as the in-use indicator light 184 and base power indicator 220 are preferably provided on the base station.

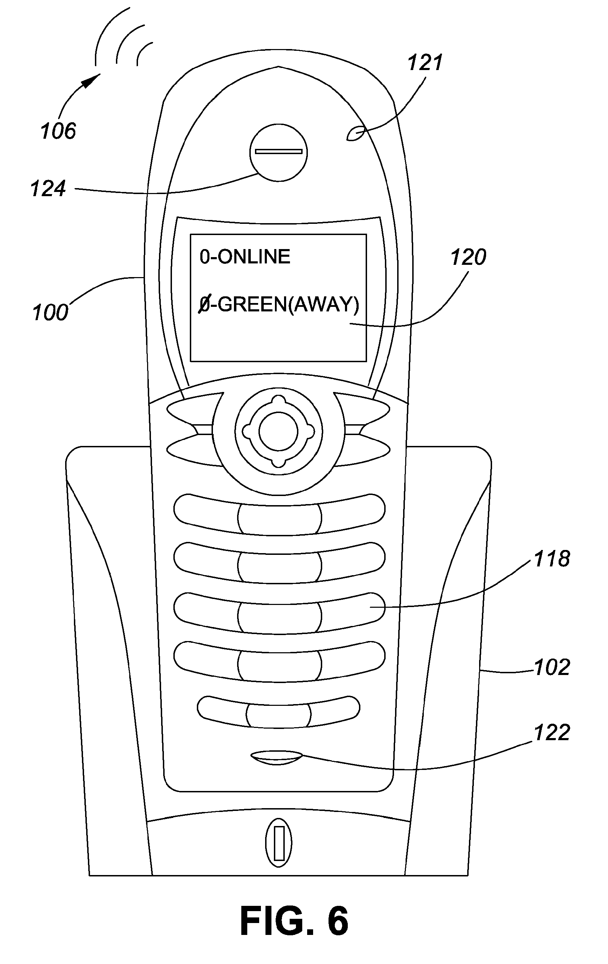

Figure 6 shows an elevation view of a preferred embodiment of a wireless handset 100 constructed in accordance with the principals of the invention. The handset includes an antenna to couple to wireless channel 106 which allows audio and control information to be exchanged between the handset and base station 104. The graphic display 120 includes a visual indication of the status of the buddy list or other users of the VoIP application that the user is running. For example, the user handset is shown as in the online state in the display and an example buddy "Green (away)" is shown in the display area of 120. As will be understood by those skilled in the art, the graphical display 120 provides a general color display device which is configurable to show graphical elements or text characters in whatever manner desired by the application developers of the VoIP services and the interface functionality of the handset 100. Therefore, the example discussed here is merely representative of one form of information that is capable of display on the graphical display 120 of the handset.

An alert indicator 121 on the handset provides visually perceptible alerts to a user. Preferably the alert indicator 121 is multi-colored a LED assembly capable of emitting a light of varying colours. One use of the light source is to provide a visual alert when a contact on the users buddy list comes online. The characteristics of the visual alert are user configurable, which allows the user to create a unique visual cue for each contact that theser wishes to have a visual alert provided for. For example, variations in colour and activation methodology, such as blinking flashing, fading in and out and the variation repetition rate may all be used to provide an on-line status alert indicating that a particular contact or a particular contact on a particular messaging service has come on-line. Moreover, an audibly perceptible online status alert may in addition or alternately be provided to a user by a sound source on the handset, such as the earpiece 124. A user configurable audible alert such as a tone, a ring tone or any desired recording may be used to indicate a particular contact or a particular contact on a particular messaging service has come on line. Thus a user perceptible alert that includes either a sound or a light can be configured to provide the user with an indication that a particular contact has come online.

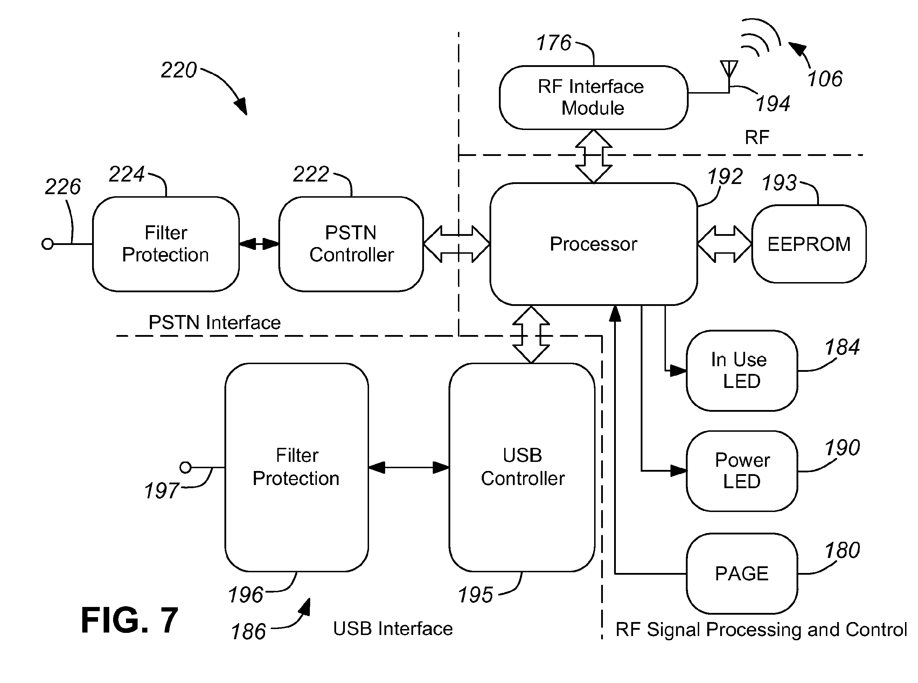

Figure 7 is a functional block diagram of the hardware elements included in the preferred embodiment of the base station. The base station has a base band processor 192 computing device and memory device 194 to store the software applications that control the base as described more fully with reference to Figure 3. The processor 192 has outputs to activate the in-use LED 184 and power LED 190 as well as receive input from the page switch 180. The processor communicates with the RF interface module 176 and controls the operation of the RF interface using the protocol driver and internet interface applications 172, 174 and 176 referred to in the discussion made with reference to Figure 3. An antenna 194 couples the RF interface module to the wireless channel 106. A USB interface 186 has a USB controller 186 in communication with processor 192 to exchange control and communications signaling between the processor and the USB interface. The USB controller 195 passes the signaling to a filter protection device 196 which prevents external impulses such as power spikes, static electricity and the like from interfering with or destroying the integrated circuit elements of the base. A connector 197 completes a connection between the base and the wireline coupling 114 referred to in Figure 1.

A PSTN interface 220 includes a PSTN controller 222, in communication with processor 192. PSTN controller provides the data terminal equipment (DTE) to couple the base to the public switched telephone network (PSTN) 101. The PSTN controller is coupled to the public switched telephone network 101 through a filter protector 224 which insulates the base device from voltage spikes or static electricity that may be present on the PSTN connector 226.

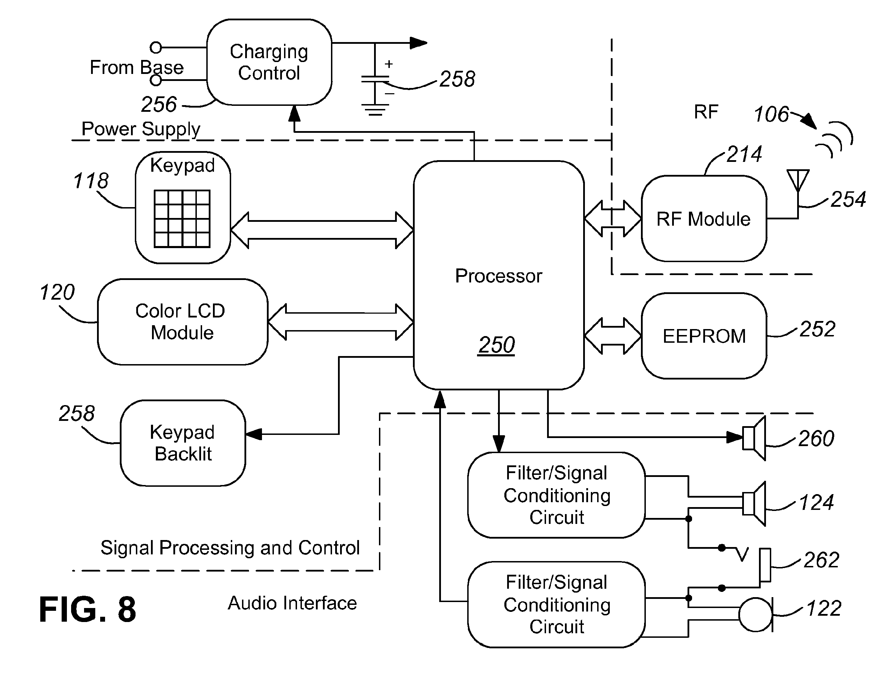

Figure 8 shows a functional block diagram of the components of the preferred embodiment of a handset constructed in accordance with the principals of the invention. The handset includes a base band processor 250 to provide a computing platform to execute the applications and functions described more fully with reference to Figure 4. Memory device 252 such as an Electrically Erasable Programmable Read Only Memory (EEPROM) is coupled to processor 250 and is used to store the software that operates the wireless handset. An RF interface module 214 is connected to the processor 250 and a handset antenna 254 to facilitate communication between the handset and the base over wireless channel 106. When the handset is positioned in the recharge station 102 a connection is established from the recharge station to the changing control centre 256 which recharges the handset battery 258 under control from the processor 250. Optionally the keypad 118 may be provided with a keypad backlight 258 which enables use of the handset keypad in darkened environments. Further, the handset may be provided with a hands free speaker 260 and a headset connector 262 to allow input and output of audio from the handset through additional elements apart from the ear piece 124 and microphone 122 conventionally provide on the handset. An alert indicator 121 light source is driven by processor 250 to provide visual alerts to the handset user. The processor 250 drives the alert indicator light source to produce user alerts for such items as system power up, recharging, recharged, incoming call, handset ringing, message waiting and buddy list online status change notifications, for example, a visible online status alert to indicate that a contact on a buddy list has come online and is available to contact. Moreover, the processor 250 can be configured to drive the earpiece 124 or handsfree speaker 260 to produce an audible online status alert in addition or alternately to the visual status alert. 124. The audible alert is user configurable including sounds such as a tone, a ring tone or other user provided recording to indicate a particular contact or a particular contact on a particular messaging service has come online. Thus a user perceptible alert that includes either a sound or a light can be configured to provide a user with an indication that a particular contact has come online.

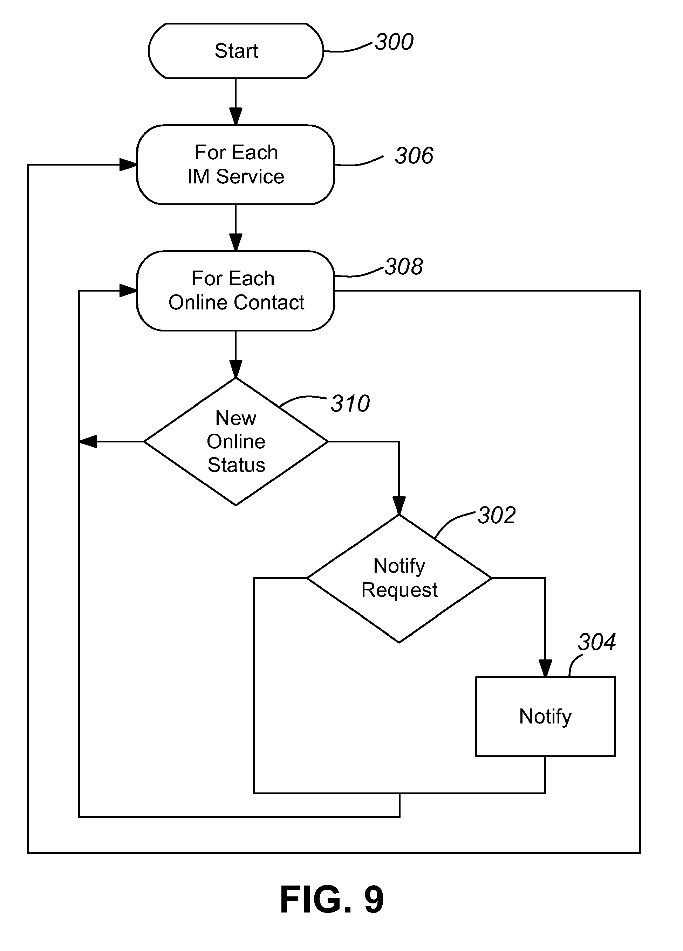

Figure 9 shows a flow chart of an exemplary algorithm for producing a contact online status alert. The algorithm depicts a contact presence agent embodied as a computer process sequence that may be implemented within the user interface tasks running on the processors 192 and 250 therebetween to provide visual and/or audio status alerts on the telephone base or handset. On unit power up, the algorithm is invoked as indicated by the start process box 300 to commence the algorithm to provide a contact status alert indication for individuals in the user's contact list or buddy list. The user is able to configure which users that an online status alert is to be provided for, and the user configuration is checked for each contact as indicated by the decision box 302. Where a user has configured a contact to provide a status alert, the notify process 304 is performed to generate the user selected status alert for that contact. The user perceptible alert performed by the Notify process produces a visible and/or audible indication that a contact has come online and thus is available to talk to. An outer process loop 306 is repeatedly cycled for each instant message service to accommodate user contacts participating in several instant messaging services, for example, MSN Messenger (trademark), Skype (trademark), Yahoo! Messenger (trademark). An inner process loop 308 is performed for each contact in the particular messaging service in process. The appearance of any contact or buddy on the instant messaging service is checked at 310 and a new online status will exit to the notify request test 302 to determine whether the user has configured the contact for a status alert. If the contact does not have a new online status, the next contact in loop 308 is then processed. If the handset user participates in only a single instant messaging service, outer loop 306 will be repeatedly performed for that messaging service and will trigger a user perceptible alert when any selected buddy or contact appears or comes on-line on the instant messaging service.

When a user is configuring the contact list entry of each contact, the user is able to set the perceptible alert to include a visually perceptible alert, an audibly perceptible alert and/or a tactile alert. A visually perceptible alert is provided by a status indicator 121, which is a light source on the handset. Variations in light colour and activation methodology, e.g. blinking, flashing, fading in and out, flash or repetition rate etc., can be specified to enable a specific visual alert to be used to indicate a particular contact or a particular contact on a particular instant messaging service is on-line. An audibly perceptible is produced by a handset sound source 124 or 260. The audibly perceptible alert is a user configurable tone, ring tone, or user made recording. Variations in sounds are specified by the user to enable a specific audible alert to be used to indicate a particular contact or a particular contact on a particular instant messaging service is now on line. An audibly perceptible is produced by a handset sound source 124 or 260. A tactile perceptible alert is a user configurable vibration produced by a mechanical vibrating device within the interior of the handset. Variations in vibration, duration sequencing and intensity may by specified by the user to enable a specific tactile alert to be used to indicate a particular contact or a particular contact on a particular instant messaging service is now on line.

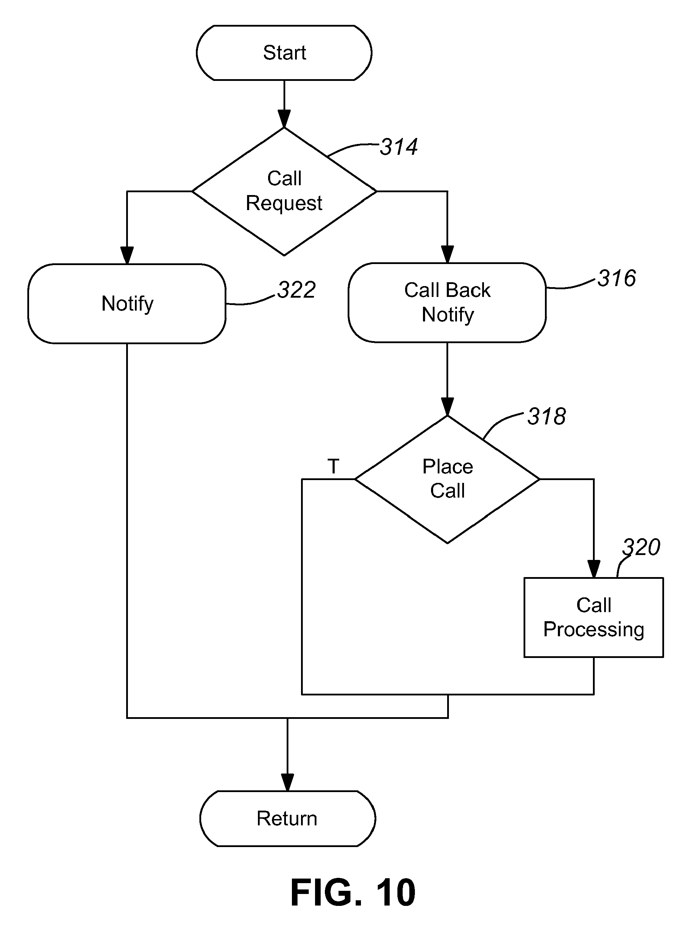

Figure 10 shows a process flow chart for performing an online contact call or call back based on presence information and provides an expanded Notify process. The call back and notify process detailed in Figure 10 corresponds to the Notify process 304 of Figure 9. Thus, as the polling process of Figure 9 is carried out for each user contact in each VolP or messaging service, the Notify process embodied in Figure 10 includes a contact automatic dialing feature. The user configuration of a call request is tested at the Call Request decision box 314. Where a user has not configured a contact with a Call Request, the Notify process 322 is performed, which simply provides a user with the audible or visible outputs from the handset to alert the user that the particular contact has come on line as described previously with reference to Figure 9. However, when the user has configured a contact with a Call Request, the Call Back Notify process 316 is performed. As will be understood, the user contact list is periodically polled and the presence status of each contact is obtained. When a particular contact comes online, the Call Back Notify process 316 is performed which causes the handset to produce a call back notify, such as to begin emitting a call back ringing melody to alert the user that a call or a call back to a contact can be made. The handset control process then waits for the user to respond, as indicated by the place call test 318. If the user wishes to place the call or initiate the call back, the user responds to the call back alert by operating the handset to place the call, which initiates the call processing 320 outcome leg of the Place Call test 318 to be performed to place a call to the user contact. If the user does not operate the handset to place the call, the "T" or timeout exit of the Place Call test is performed, causing a Return from the Notify call back process without placing any call.

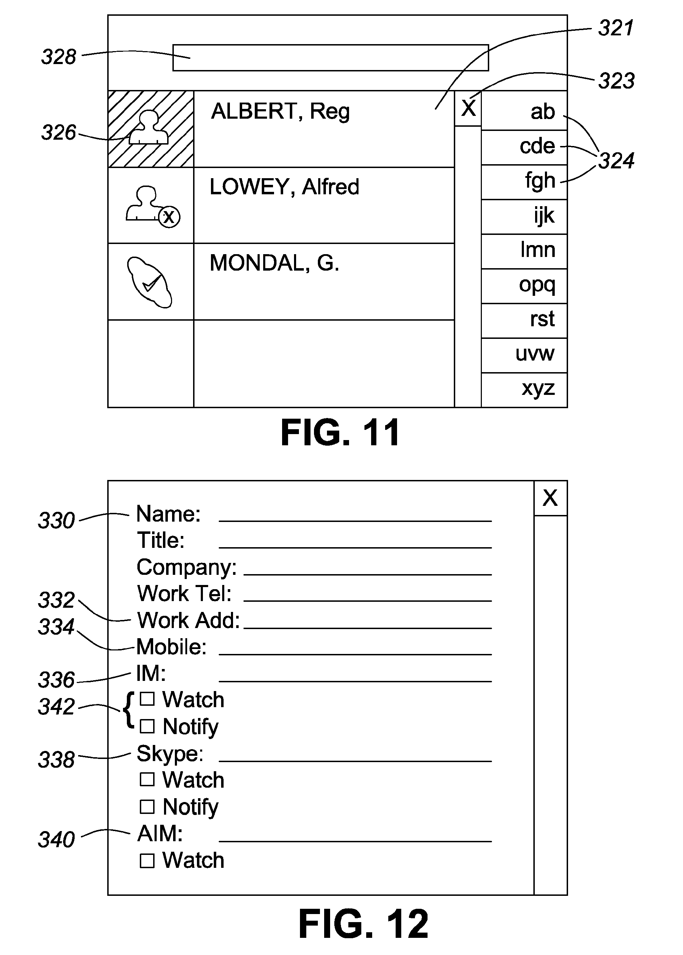

Figure 11 shows a table based implementation of a buddy list/telephone directory user interface display showing entries that a user has placed into his or her contact or buddy list. Details for particular contacts are shown in the table rows listing the contacts that the user has made entries for. A row for each contact entry includes a name display cell 321 and the displayed portion of the list of contacts entered into user device is controlled using a scroll control 323. Scroll control 323 is moved to scroll the displayed contact entry rows upwardly and downwardly to advance the displayed entries to corresponding portions of the user's contact or buddy list. The displayed portion of the user contact list is also controlled using quick jump-to index controls 324. The quick jump-to index controls provide alphabetical segmentation of the user list. For example "AB"; "CDE"; "FGH" and so forth are provided to allow the user another mechanism to control the displayed portion of the user's contact or buddy list entries that will appear on the display. Also, a search criteria input area 328 is provided to enable the user to type characters in the input area that will be used to select contacts of interest that should appear on the display area.

Each individual contact has a contact indicator cell 326 showing a graphical representation of the preferred or last used communication system for that contact, i.e. PSTN, MSN Messenger (TM), Skype (TM) etc. The contact indicator may also be configured by the user to show the current contact online status for the contact as described previously with reference to Figures 9 and 10. Thus the contact indicator cell 326 contains a graphical representation of a selected communications system, for example, MSN Messenger (TM), Skype (TM) or other similar communications systems and the online status of the contact on that system.

Figure 12 shows an embodiment of a contact entry and update user interface screen, generally depicted by reference numeral 330. This allows a user to enter details identifying the name of a contact or buddy into the directory or user contact list and captures contact and address information to allow the user to contact each particular named contact on the buddy list. For example, the user can enter a contact name and a work address 332 of the contact and a mobile telephone number 334. VolP or instant message contact information, such as an instant message IM User ID 336, or a SKYPE User ID 338, or an AOL instant message User ID 340 as shown by way of example. For each of these Internet based online messaging, chat or VolP services, the user is able to configure a Watch and a Notify function 342. If the user selects the Watch function for a contact, the Internet interface appliance will log the user onto the specific service such as IM instant messenger and poll that service to determine the online status of the buddy or contact for that messenger service. As a result, activating the Watch function for a contact will show the user the current online status of the buddy or contact on the particular chat, instant message or VoIP service.

The user is able to configure a Notify for a contact, which would then produce an audible or visible alert for the user each time the contact that the Notify has been set for comes online. The current online status of a contact that is being watched is displayed using the contact online status indicator 326 as described with reference to Figure 10.

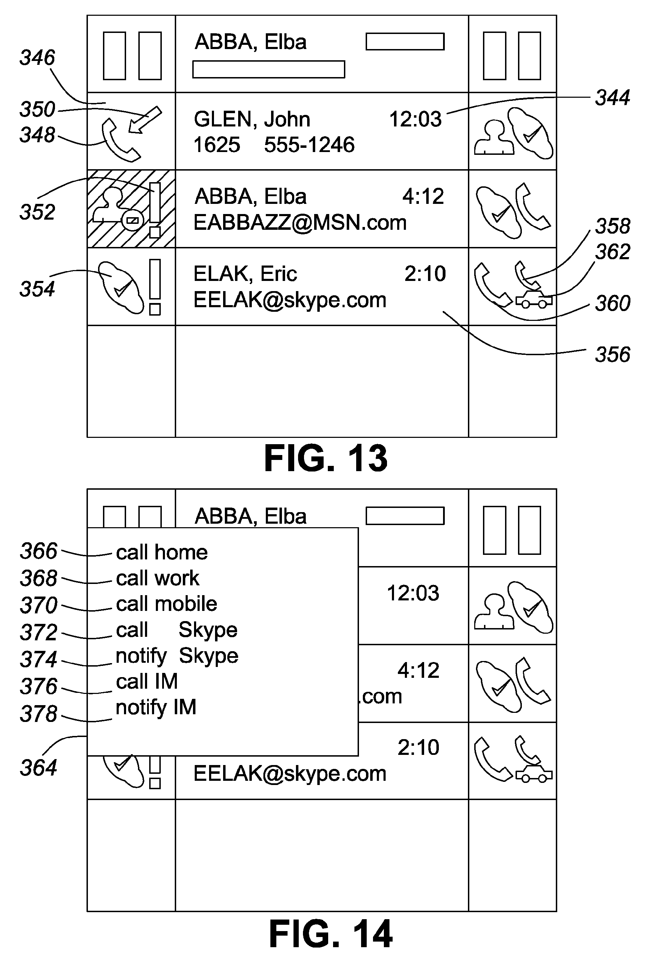

Figure 13 shows an implementation of a user interface for a call contact log display. The list is generally organized in a chronological format 344 of contacts, showing contacts that the user communicated with (outbound call), that the user attempted to contact (outbound call attempt), that have contacted the user (inbound call) or that attempted to contact the user (inbound call attempt or missed call). Details of the contact that the user was in communication with or with whom a communication attempt was made are provided in successive rows each providing a contact identification cell 344 to identify the particular buddy or contact. Each row has a contact event cell 346 containing a representation of the contact event. Preferably the contact event cell 346 is populated with graphical elements that are readily understood and language independent. For example, a graphical representation of telephone handset 348 is used to indicate a PSTN based telephone contact event.

The contact event cell 346 includes an event outcome indication, such as for example, an inbound arrow 350 used to indicate a call received from a contact. An inbound call agent responds to incoming calls to the softphone application by producing an inbound call entry in a call list and a display agent produces a display of at least a portion of the call list. For example, the entry for John GLEN at 12:03 shows caller communications address information of 1 625 555-1246 for the caller giving available caller identification information, namely, John GLEN, which is an inbound call as depicted by the right-to-left downwardly pointing arrow 350. An outbound arrow in the reverse direction of inbound arrow 352 is used to indicate an outbound call. An inbound missed call can be indicated, for example, by using an exclamation mark 352. An outbound unanswered call can also be indicated by using an exclamation mark 352 as well. Other suitable indicators of a contact event outcome can be similarly used such as changing the colour that the contact event is presented in. A first colour can be used to indicate an inbound call, another colour to indicate an outbound call and a third colour to indicate a missed call event.

The current online status of a user can be shown using a contact online status indicator 354 to show the current status of the user on the service that the contact event occurred on. For example, in the list of user contacts shown in Figure 13, Eric Elack placed a call to the user which the user did not pick up. This missed call is indicated by the exclamation mark appearing in the contact event cell in the table row next to the cell showing Eric Elack's name 356. The contact event cell 356 indicates a time when the missed call was received, namely 2:10 and may also provide the contact details, or a portion of the contact details, that can be used to contact Eric Elack which in the illustration given in Figure 12 is EELACK@skype.com. The current status of Eric Elack on the Skype message services system is shown as "online" as depicted by the contact online status indicator 354 appearing in the cell next to Eric Elack's name. Alternate contact details appear in the alternate contact cell 358 of the row, preferably trailing the contact details cell 356. The alternate contact cell 358 includes status indicator icons to enable a user to see the current online status of this particular contact on alternate communications systems. For the Eric Elack entry, two alternate contacts are shown or depicted graphically, namely, a telephone contact as depicted by the handset 360 or by mobile phone as depicted by the mobile phone handset icon 362. If the alternate contact mechanism is an Internet based communications services system such as MSN Messenger (TM) or Skype (TM) or AIM (TM), then the status of the contact on the particular instant messaging system can be depicted graphically by an icon showing whether the contact is online, away, busy, and so forth. In this manner, the communications between a user and the contacts can be displayed in a contact log which includes information depicted graphically indicating the online or offline status of a user contact or a buddy.

Figure 14 shows an exemplary user interface for an action selection screen that is produced to overlay a particular contact selected from the call log list of Figure 13. When a contact is selected from either the call log entry of Figure 13 or the buddy or contact list entry of Figure 11, the action menu, generally depicted by reference number 364, provides a list of contact actions that can be affected for the particular user. The contact selected by a user results in the overlay action menu that provides call options to contact that particular user. The exemplary action menu provides contact actions including call home 366, call work 368, call mobile 370, call Skype 372, notify Skype 374, call IM 376 or notify IM 378. In this manner, a user can select a contact to communicate with and initiate a call to that contact over any communication mechanism that has been entered or configured in the user contact or buddy list as described with reference to Figures 11 and 12. For each communication service that is configured for the contact, such as a PSTN service or an Internet based service such as Skype or AOL Instant Message, a call can be initiated by selecting a corresponding entry on the action menu 364.

From the foregoing, it will be understood that for the user's redial list, calls log and contact or phone directory, the algorithms are user configurable to poll the contact list for online presence information making matches to the contacts in the various directories and online services. The phone would then display the presence information beside each contact in the various directories while the user scrolls the list.

The above-described embodiments of the present invention are intended to be examples only. Alterations, modifications and variations may be effected to the particular embodiments by those of skill in the art without departing from the scope of the invention, which is defined solely by the claims appended hereto.

## Claims

1. An online status contact calling system comprising:
a. a communications device interoperable with a soft phone application running on an internet interface device, said communications device having a telephone style handset including a keypad and display;
b. contact list data storage containing information identifying a contact and configuration information defining at least one communications address for the contact, each said communications address including an online status indicator corresponding to the online presence of said contact at said communications address and a call request indicator having either an active or inactive status;
c. user input means to display, update and maintain said contact list data storage;
d. a contact presence agent to update said online status indicator to indicate the contact is online or other status indication; and
e. call means responsive to an active status call request indicator to activate said soft phone application to place a call to the contact when said online status indicator indicates the contact is online.

2. The system of claim 1 wherein said call means is responsive to said active status call request indicator to place a call to a contact in response to a change to online status of said contact.

3. The system of claim 1 or 2 wherein said call means further includes:
a. alert means to produce a user perceptible alert in response to a change in status to an online status of a contact having an active status call request indicator; and
b. user input means to control said call means to place a call to said contact responsive to said alert means.

4. The system of any of the preceding claims further including:
a. an inbound call agent responsive to incoming calls to said softphone application to produce an inbound call entry in a call list, each such entry including caller communications address information and available caller identification information; and
b. a display agent to produce a display of at least a portion of said call list.

5. The system of claim 4 wherein each such entry in said call list further includes an online status indicator corresponding to the caller communications address and said contact presence agent updates said online status indicator to indicate the online or other status indication for such caller communications address said display produced by said display agent further includes a display of said online status indicator.

6. The system of any of the preceding claims further including:
a. an outbound call agent responsive to calls placed by said softphone application to produce an outbound call entry in a call list, each such entry including called communications address information; and
b. a display agent to produce a display of at least a portion of said call list.

7. The system of claim 6 wherein each such entry in said call list further includes called identification information for said called communications address information correspondingly found in said contact list data storage.

8. The system of claim 6 or 7 wherein each such entry in said call list further includes an online status indicator corresponding to said called communications address and
said contact presence agent updates said online status indicator to indicate the online or other status indication of said called communications address and said display produced by said display agent further includes said a display of said online status indicator.

9. The system of any of claims 5-8 further including user input means to control said call means to place a call to a selected entry in said call list.

10. A status monitoring system operable with a soft phone application communicable with a voice service provider including:
a. user input means to maintain a contact list including configuration information identifying a contact, a communications address for that contact, an online status indicator and a contact call request indicator updatable between an active call request status or an inactive call request status;
b. a contact presence agent communicable with at least one voice service provider to update said contact online status indicator to indicate the contact is online or other status indication;
c. a display to produce an output showing configuration information for at least one contact including an online status indication of that contact; and
d. an alert monitor to produce an user perceptible output in response to an online change in status of a contact in said contact list having an active call request status.

11. The status monitoring system of claim 10 wherein said user perceptible output is at least one of a visible output, an audible output and a tactile output.

12. The status monitoring system of claim 10 or 11 further including call means responsive to a user input to activate said soft phone application to place a call to a contact communications address having an online status indicator.

13. The system of any of claims 10-12 further including:
a. an inbound call agent responsive to incoming calls to said softphone application to produce an inbound call entry in a call list, each such entry including caller communications address information and available caller identification information; and
b. a display agent to produce a display of at least a portion of said call list.

14. The system of claim 13 wherein each said entry in said call list further includes an online status indicator corresponding to the caller communications address and said contact presence agent updates said online status indicator to indicate the online or other status indication for such caller communications address said display produced by said display agent further includes a display of said online status indicator.

15. The system of any of claims 10-14 further including:
a. an outbound call agent responsive to calls placed by said softphone application to produce an outbound call entry in a call list, each such entry including called communications address information; and
b. a display agent to produce a display of at least a portion of said call list.

16. The system of claim 15 wherein each said entry in said call list further includes called identification information for said called communications address information correspondingly found in said contact list data storage.

17. The system of claim 15 or 16 wherein each said entry in said call list further includes an online status indicator corresponding to said called communications address and said contact presence agent updates said online status indicator to indicate the online or other status indication of said called communications address and said display produced by said display agent further includes said a display of said online status indicator.

18. The system of any of claims 14-17 further including user input means to control said call means to place a call to a selected entry in said call list.

19. A method of operating a communications device interoperable with a soft phone application running on an internet interface device, said communications device having a telephone style handset including a keypad and display comprising the steps of:
a. providing a contact list data storage to contain at least one entry, each such entry containing information identifying a contact, and configuration information defining at least one communications address for the contact,
b. operating a contact presence agent to determine an online or other status of such communications address;
c. receiving a call request; and
d. activating said soft phone application to place a call to a communications address having an online status.

20. The method of claim 19 further including the step of receiving user input to control the display of at least a portion of said contact list data storage.

21. The method of claim 19 or 20 wherein the step of activating said soft phone application is performed in response to a change to online status of said communications address.

22. The method of any of claims 19-21 wherein the step of activating said softphone application further includes the steps of:
a. producing a user perceptible alert in response to a change in status to an online status of a contact having an active status call request indicator; and
b. placing a call to said contact in response to user input corresponding to said user perceptible alert.

23. The method of any of claims 19-22 further including the step of producing an inbound call entry in a call list in response to incoming calls to said softphone application, each such entry including caller communications address information and available caller identification information.

24. The method of any of claims 19-23 further including the step of producing an outbound call entry in a call list in response to outbound calls placed by said softphone application, each such entry including caller communications address information.

25. The method of claim 23 or 24 further including the step of receiving user input to control the display of at least a portion of said call list.

26. The method of claim 20 or 25 wherein said display includes the online or other status of each displayed communications address.

27. The method of any of claims 19-24 further including the step of receiving user input to control the update of at least a portion of said contact list data storage.

28. The method of claim 23 or 27 further including the step of:
a. receiving a call request corresponding to at least one caller communications address; and
b. activating said soft phone application to place a call to said caller communications address having an online status.

29. The method of claim 28 wherein the step of activating said soft phone application is performed in response to a change to online status of said caller communications address.
